**Europäisches Patentamt**

**European Patent Office**

**Office européen des brevets**

(19)

(11) Veröffentlichungsnummer: **0 114 659**
**B1**

(12) ## EUROPÄISCHE PATENTSCHRIFT

(45) Veröffentlichungstag der Patentschrift:
**28.10.87**

(51) Int. Cl.⁴: **G 21 C 11/00**, G 21 C 3/32

(21) Anmeldenummer: **84100510.1**

(22) Anmeldetag: **18.01.84**

(54) **Aus Elementen zusammengesetzter Kern für einen Kernreaktor.**

(30) Priorität: **21.01.83 DE 3301965**

(43) Veröffentlichungstag der Anmeldung:
**01.08.84 Patentblatt 84/31**

(45) Bekanntmachung des Hinweises auf die Patenterteilung:
**28.10.87 Patentblatt 87/44**

(84) Benannte Vertragsstaaten:
**CH DE FR IT LI SE**

(56) Entgegenhaltungen:
**FR - A - 2 337 407**
**FR - A - 2 354 612**
**FR - A - 2 416 529**

(73) Patentinhaber: **Siemens Aktiengesellschaft Berlin und München, Wittelsbacherplatz 2, D-8000 München 2 (DE)**

(72) Erfinder: **Suchy, Peter, Dipl.-Ing., Anderlohrstrasse 48, D-8520 Erlangen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen aus Elementen zusammengesetzten Kern für einen wassergekühlten Kernreaktor, wobei die Elemente in einem quadratischen Gitterverband regelmässig angeordnete Stäbe umfassen, die von mehreren über die Länge eines Elements verteilten und durch Strukturelemente verbundenen Abstandshaltern umschlossen sind, und wobei einzelne Stäbe neutronenabschirmendes Material mit einem quadratischen Querschnitt aufweisen.

Die Erfindung befasst sich mit der Abschirmung der Strahlung, die aus dem Reaktorkern eines normalen wassergekühlten Leistungsreaktors austritt, der zur Energieerzeugung, insbesondere Elektrizitätsgewinnung benutzt wird.

Ein solcher Kern ist in Abbildung 9 auf Seite 36 des Buches «VGB-Kernkraftwerks-Seminar 1970» zu sehen, und zwar bei seinem Entstehen, denn die Abbildung zeigt das Beladen des Reaktors mit den einzelnen Elementen, die in ihrer Gesamtheit den Reaktorkern bilden. Ein einzelnes Element ist in Abbildung 11 auf Seite 37 dargestellt, während die Abbildung 10 auf Seite 36 die als Skelett bezeichnete Struktur eines einzelnen Elements erkennen lässt, in die die Stäbe eingesetzt werden. Die Stäbe haben dabei ebenso wie die als Strukturelemente dienenden Steuerstabführungsrohre einen Kreisquerschnitt, d.h. sie sind zylindrisch. Sie enthalten Kernbrennstoff, nämlich Uranoxid in Form von zylindrischen Tabletten, der von einem Zirkonhüllrohr umschlossen ist. Deshalb werden die Stäbe auch als Brennstäbe bezeichnet, im Gegensatz zu Absorber- oder Steuerstäben, die nur zur Verringerung der Reaktorleistung in die Steuerstabführungsrohre eingeschoben werden und deshalb kein fester Bestandteil der Elemente sind.

Zur Verringerung der aus dem Kern heraustretenden Strahlung ist erfindungsgemäss vorgesehen, dass am Rand des Kerns gelegene Elemente mehrere quadratische Stäbe aufweisen, die vollständig aus Metall bestehen und in einer Reihe liegen.

Mit der Erfindung wird durch eine über die normale zylindrische Form der Brennstäbe hinausragende Gestaltung der metallischen «Abschirmstäbe» eine stärkere Wirkung erreicht, als dies bei zylindrischen Abschirmstäben möglich ist. Mit einer geschlossenen Belegung einer Aussenreihe erhält man z.B. eine «Abschirmwand», ohne dass der Kernaufbau, der Brennelementwechsel oder dgl. störend beeinflusst werden. Vereinfacht ausgedrückt, werden die die Stäbe aufnehmenden normalen Gittermaschen der Abstandshalter mit mehr Abschirmmaterial ausgefüllt, das Neutronen absorbiert oder auch reflektiert. Das Auffüllen der Gittermaschen ergibt zugleich den vorteilhaften Effekt, dass der Durchsatz an Kühlmitteln verringert wird, denn damit wird ein paralleler Weg für Kühlmittel stärker verschlossen. Das Kühlmittel, das sonst in diesem Bereich weniger erwärmt würde als in den Bereichen des Kerns, in denen die Stäbe Kernbrennstoff enthalten, wird dadurch auch im Bereich der Abschirmstäbe stärker erwärmt durch eine Reduktion von praktisch nutzlosem By-pass.

Das neutronenabschirmende Metall kann vorteilhaft in einem Hüllrohr mit quadratischem Querschnitt eingeschlossen sein, weil man dadurch Reaktionen mit dem Reaktorkühlmittel vermeiden kann. Ausserdem ist es so möglich, auch mechanisch ungeeignetes Material, zum Beispiel Blei, zu verwenden.

Die Erfindung kann besonders vorteilhaft so ausgeführt werden, dass alle Stäbe der am Rand des Reaktorkerns gelegenen Abschirmelemente aus Metall bestehen und einen quadratischen Querschnitt aufweisen, weil dann die Herstellung einheitlicher Abschirmelemente, zum Beispiel unter Benutzung der gleichen Abstandshalter wie in Brennelementen, möglich ist. Ausserdem können diese Abschirmelemente unabhängig von dem Abbrand des Reaktorkerns im Kern verbleiben. Es ist aber auch möglich, in einem Abschirmelement nur einzelne Stäbe aus dem neutronenabschirmenden Material vorzusehen, während die anderen Stäbe Brennstäbe sind.

Im Gegensatz zu dem zur Regelung des Kernreaktors üblicherweise eingesetzten stark neutronenabsorbierenden Material, wie Silber-Indium-Cadmium-Legierungen, kann die Erfindung vorteilhaft mit Stahl oder mit Blei verwirklicht werden, die als neutronenabsorbierende Materialien ebenfalls bekannt sind, vorzugsweise in Form, dass ein Blei- oder Stahlkern auf der Aussenseite mit Zirkon ummantelt oder beschichtet ist. Allgemein kann man mit leichten Metallen, wie Zirkonoxid, eine hohe Reflexionswirkung erreichen, so dass die Neutronen nutzbringend zur Mitte des Kerns umgelenkt werden, während bei schweren Metallen, zum Beispiel Blei, die Absorptionswirkung überwiegt. Beide Effekte können auch vorteilhaft dadurch kombiniert werden, dass die Stäbe mit quadratischem Querschnitt in mindestens einer Reihe an der Reaktorkernaussenseite des Abschirmelements aus neutronenabsorbierendem Metall bestehen und dass dieser Reihe mindestens eine kerninnere Reihe von Stäben benachbart ist, die aus neutronenreflektierendem Material bestehen und einen quadratischen Querschnitt aufweisen.

Für die erfindungsgemässen Kernreaktoren mit Wasser ($H_2O$) als Kühlmittel ergibt sich eine günstige Abschirmwirkung für schnelle Neutronen, wenn der quadratische Stabquerschnitt 70 bis 80% der auf einen Stab entfallenden Fläche einer Gittermasche des Abstandshalters beträgt.

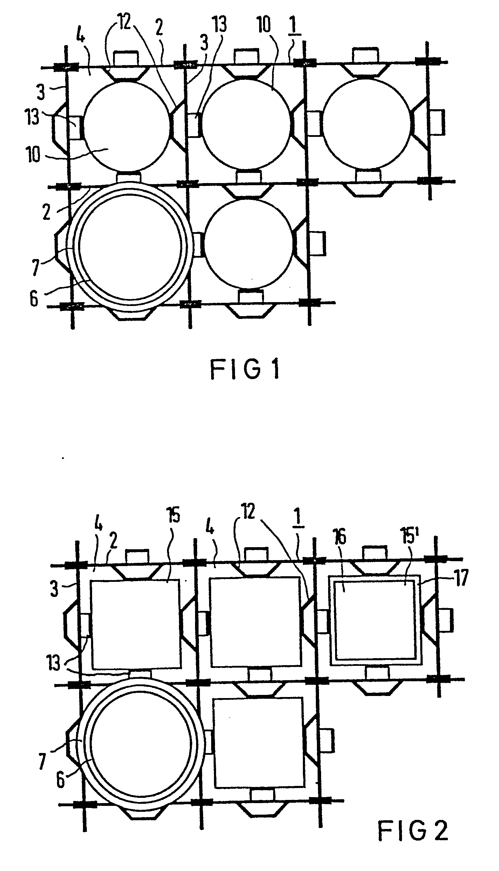

Zur näheren Erläuterung der Erfindung werden anhand der beiliegenden Zeichnung Ausführungsbeispiele beschrieben, die in dem Ausschnitt eines Elements dargestellt sind, und zwar in Fig. 2, 3 und 4 gegenüber dem in Fig. 1 dargestellten Stand der Technik.

In Fig. 1 ist der in einer Draufsicht dargestellte bekannte Abstandshalter 1 eines Brennelements für einen Druckwasserreaktor massstabsgerecht gezeichnet. Er umfasst rechtwinklig zueinander verlaufende geradlinige Blechstreifen 2 und 3, die regelmässige Maschen 4 eines quadratischen Gitters einschliessen. In einer der Maschen 4 ist ein Führungsrohr 6 angeordnet, das mit seinem kreisförmigen Querschnitt gerade in eine Masche hineinpasst. Mit aufgesetzten Ringen 7 ist das Rohr 6 oberhalb und unterhalb der Bleche 2 und 3 des Abstandshalters 1 so versehen, dass mehrere übereinander liegende Abstandshalter 1 zu einem Brennelementskelett verbunden sind. Zum Beispiel ist die Maschenweite des Abstandshalters 14,3 bzw. 12,7 mm. Genauso gross ist der Aussendurchmesser des Führungsrohres 6.

In den anderen Maschen 4 des Brennelementskeletts sitzen Stäbe 10 mit einem kleineren kreisförmigen Querschnitt. Der Durchmesser der Stäbe 10 beträgt nur 10,8 bzw. 9,5 mm. Deshalb sind die Stäbe 10 durch Ausbuchtungen 12 und 13 gehalten, die aus den Blechen 2 und 3 in das Innere der Maschen 4 vorspringen. Die Stäbe 10 sind beim Bekannten sogenannte Brennstäbe. Sie enthalten in einem Zirkonrohr Brennstofftabletten aus keramisch gesintertem Uranoxid. Die darin entwickelte Kernspaltungswärme wird an das als Kühlmittel verwendete Wasser ($H_2O$) abgegeben, das den Kern in Längsrichtung der Stäbe, also quer zur Zeichnungsebene, durchströmt.

Bei der Erfindung ist dagegen, wie die Fig. 2 zeigt, an die Stelle der Stäbe 10 mit ihrem Kreisquerschnitt Abschirmmaterial in Form eines Stahlstabes 15 mit quadratischem Querschnitt gesetzt. Die Kantenlänge des Quadrates ist mit 10,8 bzw. 9,5 mm ebenso gross wie der Durchmesser der zylindrischen Brennstäbe. Deshalb kann der gleiche Abstandshalter 1 mit den gleichen Vorsprüngen 12, 13 verwendet werden, der mit den gleichen Führungsrohren 6 zu einem Brennelementskelett verbunden ist. Die zur Abschirmung verwendete Stahlmasse ist jedoch um 30% grösser als bei einer zylindrischen Form der Stahlstäbe. In dem gleichen Masse ist auch die Kühlmittelströmung verringert, die sonst parallel zur Längsrichtung der Stäbe durch die Maschen 4 des Abstandshalters 1 strömt. Damit ist ein Ausgleich für die Tatsache geschaffen, dass in den Abschirmstäben 15 weniger Wärme entwickelt wird als in den Brennstäben 10.

Bei dem Stab 15' ist in Fig. 2 angedeutet, dass ein Stahlkern 16 mit einer Ummantelung 17 aus Zirkon versehen ist. Die Ummantelung kann zum Beispiel als Korrosionsschutz aufgedampft oder durch ein galvanisches Verfahren aufgebracht werden.

Entsprechend Fig. 2 können Elemente vollständig mit Stäben 15 versehen und an den Rand eines Reaktorkerns gesetzt werden, dessen Mittelbereich aus normalen Elementen entsprechend Fig. 1 besteht. Man kann aber eine ausreichende Abschirmwirkung möglicherweise schon dadurch erhalten, dass nur eine oder mehrere dem Rand zugekehrte Reihen in Form von Abschirmstäben 15 anstelle der sonst in den Elementen vorgesehenen Brennstäbe ausgeführt sind.

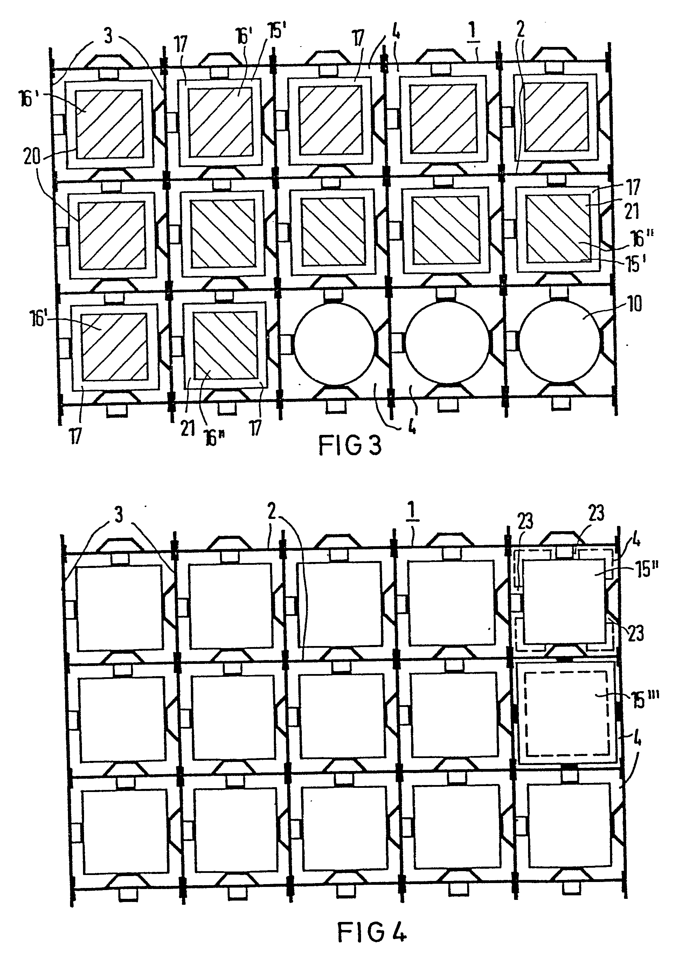

In Fig. 3 ist eine Ausführungsform dargestellt, bei der in einem Element die kernäussere Reihe 20 mit Stäben 15' versehen ist, deren Zirkonhüllrohr 17 einen Bleikern 16' als neutronenabsorbierendes Material enthält. Die benachbarte kerninnere Reihe 21 enthält dagegen in den Hüllrohren 17 der Stäbe 15' einen Kern 16'' aus Zirkonoxid oder $D_2O$, das insbesondere schnelle Neutronen durch Reflexion abschirmt. Der Rest des Elements 1 umfasst Brennstäbe 10.

Die Reihen 20 und 21 verlaufen beim Ausführungsbeispiel nach Fig. 2 im rechten Winkel, weil das Element für eine kernäussere Ecke vorgesehen ist. Für Elemente, deren Aussenkanten auf einem geraden Teil des Kernrandes liegen, würden die Reihen 20, 21 geradlinig parallel zueinander verlaufen. Ferner könnten absorbierende und reflektierende Materialien 16', 16'' auch in jeweils mehreren Reihen vorgesehen sein.

In Fig. 4 ist dargestellt, dass unter Beibehaltung des Abstandshalters 1 aus Fig. 1 der Querschnitt des neutronenabschirmenden Materials eines Stabes 15'' auch über die Abmessungen des Brennstabdurchmessers hinaus vergrössert werden kann. Die Angriffsstellen der Vorsprünge 12, 13 des Abstandshalters 1 liegen dann in Vertiefungen 23 des gestrichelt gezeichneten quadratischen Querschnitts. Verzichtet man auf den für zylindrische Brennstäbe üblichen Abstandshalter 1, so kann der quadratische Querschnitt noch grösser gemacht werden. Das neutronenabschirmende Material solcher Stäbe 15''' bedeckt dann ca. 80% der Fläche der Gittermaschen 4 und erreicht so die maximale Abschirmungswirkung bei grösster Aufwärmspanne der «By-pass»-Strömung des Kühlmittels.

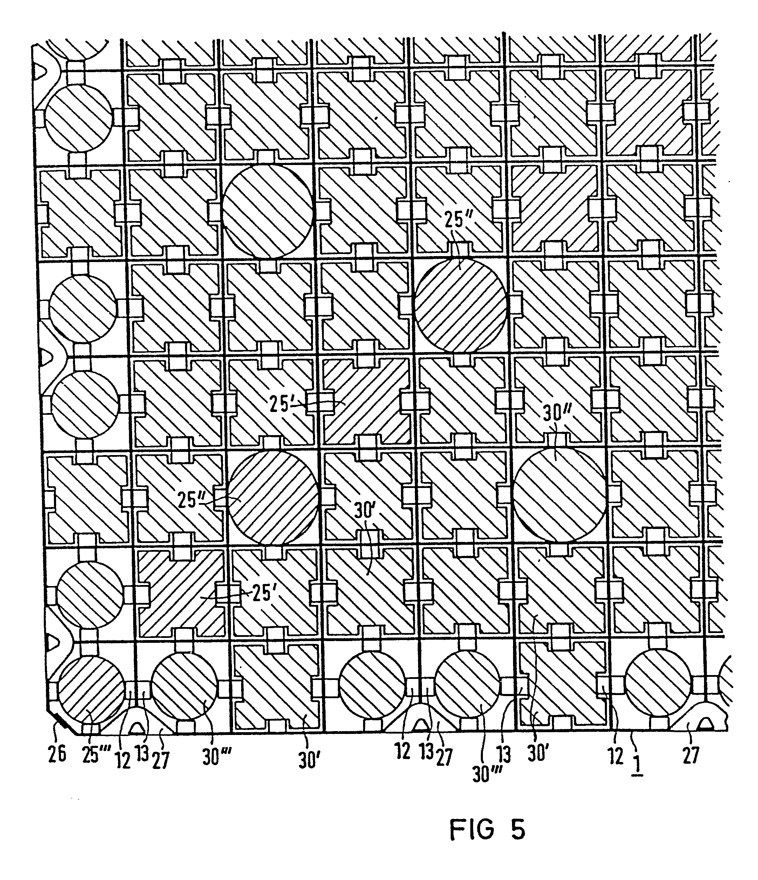

Als weiteres Ausführungsbeispiel ist in Fig. 5 ein Querschnitt durch ein Element für einen Druckwasserleistungsreaktor dargestellt, und zwar zeigt die Figur nur ein Viertel des Elementquerschnitts, weil das Element einen doppelt symmetrischen Aufbau mit vier gleichen Quadranten hat. Der quadratische Elementquerschnitt mit 200 mm Kantenlänge ist als Gitterraster mit 14 × 14 Gittermaschen 4 unterteilt.

Das Element nach Fig. 5 umfasst nur Stäbe mit neutronenabschirmendem Material, die mit einem bekannten, sonst für Brennstäbe eines Brennelements verwendeten Abstandshalter 1 zusammengefasst sind. Es sitzt am Rand des aus Elementen bestehenden Reaktorkerns, insbesondere in dessen nach aussen vorspringenden Ecken.

Als neutronenabschirmendes Material ist einmal ein vor allem neutronenabsorbierendes Material, nämlich Stahl 25, vorgesehen. Es ist in der Figur von links unten nach rechts oben schraffiert und liegt in Form massiver Stäbe mit drei Querschnitten vor. Den grössten Teil, nämlich fast 90%, der Gittermaschen 4 füllen quadratische Stahlstäbe 25', die in diagonalen Reihen des Elementquerschnitts kreuzweise angeordnet sind. Im Zentrum des Elements liegen also vier Stahlstäbe 25' unmittelbar benachbart. Der grosse Stabquerschnitt ist durch Vertiefungen 23 für die Vorsprünge 12, 13 in normalen Abstandshaltern 1 unterzubringen.

Mit 25″ sind massive Stahlstäbe bezeichnet, die im Elementquerschnitt anstelle der sonst dort vorgesehenen Steuerstabführungsrohre angeordnet sind. Die Stahlstäbe 25″ sind als Strukturelemente zum Aufbau des Elementskeletts mit den Abstandshaltern 1 fest verbunden. Sie haben einen Kreisquerschnitt mit einem Durchmesser gleich der Kantenlänge der Gittermaschen 4.

In den Ecken des Elementquerschnitts sitzen massive Stahlstäbe 25‴ mit einem Durchmesser wie die Brennstäbe benachbarter Brennelemente. Er ist um die Ausladung der Vorsprünge 12, 13 kleiner als die Weite der Gittermaschen 4. Die Stäbe 25‴ ergeben sich daraus, dass der Abstandshalter 1 an den Ecken Abflachungen 26 aufweist sowie nach innen geneigte Abweisbleche 27. Die Abweisbleche 27 sind auch an anderen Stellen der Abstandshalter 1 vorgesehen, um ein Verhaken bei Längsbewegungen der Elemente zu verhindern.

Mit einer von rechts unten nach links oben verlaufenden Schraffur ist neutronenreflektierendes Metall, nämlich Zirkon 30 bezeichnet, das zur Neutronenabschirmung in Form massiver Stäbe in den dreieckigen Abschnitten zwischen den diagonalen kreuzförmigen Reihen der Stahlstäbe 25 angeordnet ist.

Auch das Zirkon 30 ist, soweit wie möglich, in Form quadratischer Stäbe 30′ vorgesehen, die den gleichen Querschnitt wie die Stahlstäbe 25′ haben. Dieser Querschnitt wird an den Stellen der Steuerstabführungsrohre ersetzt durch massive Zirkonstäbe 30″, die als Strukturmaterial mit dem Abstandshalter 1 verbunden sind.

Am Rand des Elements sind im Bereich der Abweisbleche 27 runde Zirkonstäbe 30‴ vorgesehen. Sie haben, wie die Stahlstäbe 25‴, Brennstababmessungen. Ihre deswegen kleinere Abschirmungswirkung wird aber durch die vorgenannte dichte Packung der quadratischen Stäbe 30″ (90% des Maschenquerschnitts) sozusagen kompensiert.

**Patentansprüche**

1. Aus Elementen zusammengesetzter Kern für einen wassergekühlten Kernreaktor, wobei die Elemente in einem quadratischen Gitterverband regelmässig angeordnete Stäbe umfassen, die von mehreren über die Länge eines Elements verteilten und durch Strukturelemente verbundenen Abstandshaltern umschlossen sind, und wobei einzelne Stäbe neutronenabschirmendes Material mit einem quadratischen Querschnitt aufweisen, dadurch gekennzeichnet, dass am Rand des Kerns gelegene Elemente mehrere quadratische Stäbe (15″; 25′, 30′) aufweisen, die vollständig aus Metall bestehen und in einer Reihe liegen.

2. Kern nach Anspruch 1, dadurch gekennzeichnet, dass alle Stäbe (15) der am Rand des Kerns gelegenen Elemente aus Metall bestehen und einen quadratischen Querschnitt aufweisen.

3. Kern nach Anspruch 1 oder 2, dadurch gekennzeichnet, dass das Metall in an sich bekannter Weise Stahl ist.

4. Kern nach Anspruch 3, dadurch gekennzeichnet, dass ein Stahlkern (16) auf der Aussenseite mit Zirkon (17) ummantelt oder beschichtet ist.

5. Kern nach Anspruch 1, dadurch gekennzeichnet, dass die Stäbe (15′) in mindestens einer Reihe (20) am Rand des Kerns neutronenabsorbierendes Metall (16′) mit quadratischem Querschnitt umfassen und dass dieser Reihe mindestens eine kerninnere Reihe (21) von Stäben (15′) mit quadratischem Querschnitt und neutronenreflektierendem Material (16″), vorzugsweise Zirkonoxid, benachbart ist (Fig. 3).

6. Kern nach einem der Ansprüche 1 bis 5, dadurch gekennzeichnet, dass der Stabquerschnitt 70 bis 80% des auf einen Stab entfallenden Elementquerschnitts beträgt.

7. Kern nach Anspruch 6, dadurch gekennzeichnet, dass die Stäbe (15″, 25′, 30′) Vertiefungen (23) zur Aufnahme von Vorsprüngen (12, 13) des Abstandshalters (1) aufweisen (Fig. 5).

**Claims**

1. A core, composed of elements, for a water-cooled nuclear reactor, where the elements comprise rods which are arranged in regular fashion in a square grid structure and which are surrounded by a plurality of spacing elements which are distributed over the length of an element and which are connected by structural components and where individual rods consist of neutron-screening material of square cross-section, characterized in that elements located at the edge of the core comprise a plurality of square rods (15‴, 25′, 30′) which consist entirely of metal and are arranged in a row.

2. A core as claimed in claim 1, characterized in that all the rods (15) of the elements located at the edge of the core consist of metal and have a square cross-section.

3. A core as claimed in claim 1 or claim 2, characterized in that the metal consists of steel in a manner known per se.

4. A core as claimed in claim 3, characterized in that a steel core (16) is externally encased or coated with zirconium (17).

5. A core as claimed in claim 1, characterized in that the rods (15′) in at least one row (20) at the edge of the core consist of neutron-absorbent metal (16′) of square cross-section and that adjacent to this row is arranged at least one inner row (21) of rods (15′) which have a square cross-section and consist of neutron-reflecting material (16″), preferably zirconium oxide (fig. 3).

6. A core as claimed in one of claims 1 to 5, characterized in that the rod cross-section amounts to 70 to 80% of the element cross-section assigned to a rod.

7. A core as claimed in claim 6, characterized in that the rods (15″; 25′, 30′) are provided with recesses (23) which accommodate projections (12, 13) of the spacing component (1) (fig. 5).

## Revendications

1. Cœur de réacteur nucléaire refroidi à l'eau, constitué d'assemblages, ceux-ci comprenant des crayons qui sont disposés régulièrement dans un système de grille carré et qui sont entourés de plusieurs entretoises réparties sur la longueur d'un assemblage et reliées par des éléments de structure, ces crayons individuels ayant un matériau de blindage vis-à-vis des neutrons et ayant une section transversale carrée, caractérisé en ce que des assemblages placés au bord du cœur comportent plusieurs crayons (15″, 25′, 30′) carrés, qui sont entièrement en métal et qui sont disposés suivant une rangée.

2. Cœur suivant la revendication 1, caractérisé en ce que tous les crayons (15) des assemblages placés au bord du cœur sont en métal et ont une section transversale carrée.

3. Cœur suivant la revendication 1 ou 2, caractérisé en ce que le métal est, d'une manière en soi connue, de l'acier.

4. Cœur suivant la revendication 3, caractérisé en ce que le côté extérieur d'un noyau en acier (16) est enrobé de zirconium (17) ou en est revêtu.

5. Cœur suivant la revendication 1, caractérisé en ce que les crayons (15′) d'au moins une rangée (20) sur le bord du cœur comprennent du métal (16′) absorbant les neutrons et de section transversale carrée, et en ce que cette rangée est voisine d'au moins une rangée (21) de crayons (15′) à l'intérieur du cœur, de section transversale carrée et en matériau réfléchissant les neutrons (16″), de préférence en oxyde de zirconium (figure 3).

6. Cœur suivant l'une des revendications 1 à 5, caractérisé en ce que la section transversale d'un crayon représente de 70 à 80% de la section transversale de l'assemblage correspondant à un crayon.

7. Cœur suivant la revendication 6, caractérisé en ce que les crayons (15′ ; 25′, 30′) comportent des évidements (23) de réception de parties saillantes (12, 13) de l'entretoise (1) (figure 5).

5

FIG 1

FIG 2

FIG 3

FIG 4

FIG 5